Europäisches Patentamt

**European Patent Office**

Office européen des brevets

(11) Veröffentlichungsnummer: **0 088 881**
**B1**

(12) # EUROPÄISCHE PATENTSCHRIFT

(45) Veröffentlichungstag der Patentschrift:
09.04.86

(21) Anmeldenummer: 83101090.5

(22) Anmeldetag: 05.02.83

(51) Int. Cl.⁴: **F 16 K 11/04, F 16 K 11/10**

(54) Pneumatisches Doppelsitzventil.

(30) Priorität: **17.03.82 CH 1658/82**

(43) Veröffentlichungstag der Anmeldung:
**21.09.83 Patentblatt 83/38**

(45) Bekanntmachung des Hinweises auf die Patenterteilung:
**09.04.86 Patentblatt 86/15**

(84) Benannte Vertragsstaaten:
**AT BE CH DE FR GB IT LI NL SE**

(56) Entgegenhaltungen:
**DE - B - 1 206 240
DE - C - 278 814
FR - A - 1 437 459
FR - A - 1 497 857
US - A - 3 779 280**

(73) Patentinhaber: **Werkzeugmaschinenfabrik
Oerlikon-Bührle AG, Birchstrasse 155, CH-8050 Zürich
(CH)**

(72) Erfinder: **Leutwyler, Robert, Regensbergstrasse 41,
CH-8113 Boppelsen (CH)**
Erfinder: **Grendelmeier, Bruno, Altmoosstrasse 34,
CH-8157 Dielsdorf (CH)**

LIBER. STOCKHOLM 1986

## Beschreibung

Die Erfindung betrifft ein pneumatisches Doppelsitzventil, insbesondere für Schienenfahrzeuge, z.B. zur Betätigung eines Stromabnehmers, einer Gleitschutzvorrichtung, einer Sandstreuvorrichtung, enthaltend:
- einen beweglichen Ventilstössel 11;
- einen auf dem Ventilstössel 11 starr befestigten Ventilkörper 13,14, der zwei im axialen Abstand gehaltene, radial vorstehende Dichtungsringe 23,24 aufweist;
- zwei ortsfeste, einander zugekehrte und mit je einem Dichtungsring 23,24 zusammenwirkende Ventilsitze 25, 26, die je einen Durchlass von einer mittleren Ventilkammer C zu je einer äusseren Ventilkammer B,D umschliessen, wobei der Durchmesser des Ventilkörpers 13,14 kleiner ist als der Durchmesser der Durchlässe;
- zwei auf dem Ventilkörper 13,14, zwischen den Dichtungsringen 23,24 verschiebbar angeordnete Ringe 27, 28, die mittels einer zwischen den Ringen 27,28 angeordneten Feder 29 in der Mittelstellung des Doppelsitzventiles beide Dichtungsringe 23,24 auf die Ventilsitze 25,26 drücken und in jeder der Öffnungsstellungen den Ventilhub durch gegenseitige Anlage aneinander begrenzen.

Es ist ein hydraulisches Doppelsitzventil dieser Art bekannt (siehe DE-B- 1206240), bei dem die Dichtungsringe an ihrem inneren Rande eingeklemmt sind und zwischen den beiden verschiebbaren Ringen eine starke Feder angeordnet ist, welche in der Lage ist, das Ventil in seiner Mittelstellung auch gegen eine Druckdifferenz geschlossen zu halten. Die Verschiebung der Ringe ist nicht begrenzt, sodass die Feder die Dichtungsringe über diese Ringe festklemmen kann.

Dieses bekannte Doppelsitzventil eignet sich nicht zur Verwendung als pneumatisches Vehtil mit kleinen Drücken.

Die Aufgabe, welche mit der vorliegenden Erfindung gelöst werden soll, besteht in der Schaffung eines pneumatischen Doppelsitzventiles, das auch bei sehr kleinen Drücken zuverlässig funktioniert und bei dem auch sehr weiche und empfindliche Dichtungsringe nicht beschädigt werden. Ausserdem soll auch in der Mittelstellung eine zuverlässige Dichtung des Doppelsitzventiles gewährleistet sein.

Das Doppelsitzventil, mit dem diese Aufgabe gelöst wird, ist dadurch gekennzeichnet,
- dass die Dichtungsringe 23,24 in Umfangsnuten 21,22 des Ventilkörpers 13,14 eingelegt sind;
- dass jede der Umfangsnuten 21,22 auf einer Seite eine Abschrägung 31 aufweist, die als Stützfläche für den eingelegten Dichtungsring 23,24 dient, und
- dass jeder der federbelasteten Ringe 27,28 einen radial einwärts gerichteten Flansch 30 aufweist, der sich zur Begrenzung seiner Verschiebung auf dem Ventilkörper 13,14 abstützt.

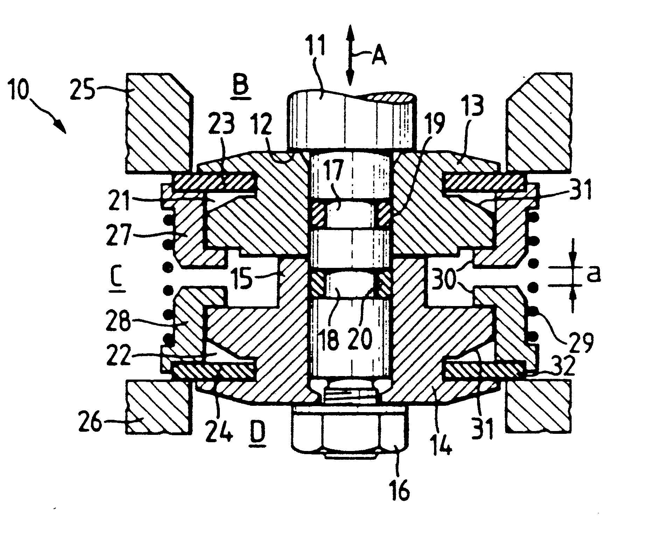

Ein Ausführungsbeispiel des erfindungsgemässen Doppelsitzventiles ist i folgenden anhand der beigefügten Zeichnun ausführlich beschrieben. Die einzige Figur ze einen senkrechten Schnitt durch ein Ausführungsbeispiel des Doppelsitzventiles.

Gemäss der einzigen Figur weist das erfindungsgemässe Doppelsitzventil 10 eine Ventilstössel 11 auf, der in nicht dargestellte Weise z.B. pneumatisch, hydraulisch oder elektromagnetisch betätigbar ist, d.h. er läss in Richtung des Doppelpfeiles A aus der gezeigten Mittelstellung um den Betrag a na oben und nach unten verschieben, wie noch näher zu erläutern ist. Dieser Ventilstössel 1 weist eine Schulter 12 auf, an der ein erster Ventilkörper 13 anliegt. An diesem ersten Ventilkörper liegt ein zweiter Ventilkörper 14 seinem hülsenförmigen Ansatz 15 an. Diese beiden Ventilkörper 13 und 14 unterscheiden im wesentlichen durch den erwähnten hülsenförmigen Ansatz 15. Mit Hilfe einer M 16 werden die beiden Ventilkörper 13 und 14 gegen die Schulter 12 des Ventilstössels 11 gedrückt. Der Ventilstössel 11 weist zwei Nu und 18 auf, in welche Dichtungsringe 19 und eingesetzt sind. Ebenso weisen die beiden Ventilkörper 13 und 14 zwei Umfangsnuten 2 22 auf, in welche ebenfalls zwei Dichtungsrir 23 und 24 eingesetzt sind. Die Dichtungsring und 20 am Ventilstössel 11 weisen einen kreisförmigen Querschnitt auf und die Dichtungsringe 23 und 24 an den Ventilkörpe und 14 weisen einen rechteckigen Querschn auf. Der Dichtungsring 23 des ersten Ventilkörpers 13 liegt in der gezeigten Stellu einem oberen Ventilsitz 25 eines nicht dargestellten Ventilgehäuses an und der Dichtungsring 24 des zweiten Ventilkörpers liegt an einem unteren Ventilsitz 26 des erwähnten nicht dargestellten Ventilgehäuse Auf dem oberen Ventilkörper 13 ist ein erste 27 verschiebbar angeordnet und auf dem un Ventilkörper 14 ist ein zweiter Ring 28 verschiebbar angeordnet. Eine Schraubenfe 29, die sich einerseits am ersten Ring 27 und andererseits am zweiten Ring 28 abstützt, h Bestreben, die beiden Ringe 27 und 28 gege beiden Dichtungsringe 23 und 24 und damit gegen die zugehörigen Ventilsitze 25 und 26 drücken. In der gezeigten Stellung liegt jede beiden Ringe 27 und 28 mit seinem Flansch : zugehörigen Ventilkörper 13 bzw. 14 an. Wie der Zeichnung ersichtlich ist, kann entweder eine oder andere der beiden Ringe 27 u. 28 entgegen der Kraft der Schraubenfeder 29 u Betrag a verschoben werden. Die beiden Umfangsnuten 21 und 22 der Ventilkörper 13 14 weisen je eine Abschrägung 31 auf, die e ermöglicht, dass die Dichtungsringe 23 und sich schrägstellen können, bis sie an dieser Abschrägung 31 zur Anlage gelangen. Die R 27 und 28 besitzen eine tellerförmige Ausspa 32 zur teilweisen Aufnahme der Dichtungsrir

und 24.
Die Wirkungsweise des beschriebenen
ppelsitzventiles 10 ist wie folgt:
In der gezeigten Mittelstellung des
ntilstössels 11 liegen die beiden
chtungsringe 23 und 24 an den zugehörigen
ntilsitzen 25 und 26 an und es kann keine
uckluft aus einer der Kammern B, C und D
essen. Wird der Ventilstössel 11 um den Betrag
gesenkt, so werden auch die beiden
ntilkörper 13 und 14 um den Betrag a gesenkt,
bei wird der erste Ring 27 gegen den zweiten
ng 28 entgegen der Kraft der Feder 29 gedrückt.
r untere Dichtungsring 24 wird gegen die
schrägung 31 der Umfangsnut 22 gedrückt und
gt weiterhin am unteren Ventilsitz 26 an. Der
ere Dichtungsring 23 wird jedoch von seinem
ntilsitz 25 abgehoben, so dass Druckluft aus
r Kammer C in die Kammer B fliessen kann.
alog werden beim Abheben des Ventilstössels
um den Betrag a auch die beiden Ventilkörper
und 14 um den Betrag a angehoben, dabei wird
r zweite Ring 28 gegen den ersten Ring 27,
tgegen der Kraft der Feder 29, gedrückt. Der
ere Dichtungsring 23 wird gegen die
schrägung 31 der Umfangsnut 21 gedrückt und
gt weiterhin am oberen Ventilsitz 25 an. Der
tere Dichtungsring 24 wird jedoch von seinem
ntilsitz 26 abgehoben, so dass Druckluft jus der
mmer C in die Kammer D fliessen kann.

**tentansprüche**

1. Pneumatisches Doppelsitzventil,
sbesondere für Schienenfahrzeuge, z.B. zur
tätigung eines Stromabnehmers, einer
eitschutzvorrichtung, einer
ndstreuvorrichtung, enthaltend:
- einen beweglichen Ventilstössel (11);
- einen auf dem Ventilstössel (11) starr
festigten Ventilkörper (13,14), der zwei im
ialen Abstand gehaltene, radial vorstehende
chtungsringe (23,24) aufweist;
- zwei ortsfeste, einander zugekehrte und mit je
em der Dichtungsringe (23,24)
sammenwirkende Ventilsitze (25,26), die je
en Durchlass von einer mittleren Ventilkammer
) zu einer äusseren Ventilkammer (B,D)
schliessen, wobei der Durchmesser des
ntilkörpers (13,14) kleiner ist, als der der
rchlässe;
- zwei auf dem Ventilkörper (13,14) zwischen
n Dichtungsringen (23,24) verschiebbar
geordnete Ringe (27,28), die mittels einer
ischen den Ringen (27, 28) angeordneten Feder
) in der Mittelstellung des Doppelsitzventils
ide Dichtungsringe (23,24) auf die Ventilsitze
,26) drücken und in jeder der
fnungsstellungen den Ventilhub durch
genseitige Anlage aneinander begrenzen,
durch gekennzeichnet,
- dass die Dichtungsringe (23,24) in
nfangsnuten (21, 22) des Ventilkörpers (13,14)

eingelegt sind;
- dass jede der Umfangsnuten (21,22) auf einer
Seite eine Abschrägung (31) aufweist, die als
Stützfläche für den eingelegten Dichtungsring
(23,24) dient, und
- dass jeder der federbelasteten Ringe (27,28)
einen radial einwärts gerichteten Flansch (30)
aufweist, der sich zur Begrenzung seiner
Verschiebung auf dem Ventilkörper (13,14) in
Richtung Ventilsitz (25, 26) am Ventilkörper (13,
14) abstützt.

2. Doppelsitzventil nach Anspruch 1, dadurch
gekennzeichnet, dass die Dichtungsringe (23,24)
lose in die Umfangsnuten (21,22) eingelegt sind.

3. Doppelsitzventil nach Anspruch 1 oder 2,
dadurch gekennzeichnet, dass sich die
Abschrägung (31) auf der dem zugeordneten
Ventilsitz (25,26) abgewandten Seite der
Umfangsnut (21,22) befindet.

4. Doppelsitzventil nach einem der Ansprüche 1-
3, dadurch gekennzeichnet, dass die Ringe (27,28)
eine tellerförmige Aussparung (32) aufweisen, zur
teilweisen Aufnahme der Dichtungsringe (23,24).


**Claims**

1. Double-seat pneumatic valve, especially for
rail vehicles, for example for actuating a current
collector, an anti-slip device, or a sanding device,
said valve comprising:
- a movable valve plunger (11);
- a valve body (13, 14) which is rigidly attached
to the valve plunger (II) and possesses two
sealing rings (23, 24) which protrude radially and
are held in a manner such that they are axially
spaced;
- two stationary valve seats (25, 26) which face
one another and severally cooperate with one of
the sealing rings (23, 24), these valve seats (25,
26) severally encircling a through-opening from a
middle valve chamber (C) to an outer valve
chamber (B, D), the diameter of the valve body
(13, 14) being smaller than that of the throughopenings;
- two rings (27, 28) which are installed on the
valve body (13, 14), between the sealing rings (23,
24), in a manner such that they can be moved by
sliding, a spring (29), installed between these
rings (27, 28), causing them to press the two
sealing rings (23, 24) onto the valve seats (25, 26)
when the double-seat valve is in the neutral
position, while in each of the opening positions
the two rings (27, 28) limit the valve travel as a
result of coming into contact with one another,
characterized
- in that the sealing rings (23, 24) are inset into
peripheral grooves (21, 22) in the valve body (13,
14);
- in that each of the peripheral grooves (21, 22)
has a chamfer (31) on one side, this chamfer (31)
serving as a supporting surface for the inset
sealing ring (23, 24), and
- in that each of the spring-loaded rings (27, 28) has a flange (30) which points radially inwards and bears against the valve body (13, 14) in order to limit its sliding movement thereon, in the direction of the valve seat (25, 26).

2. Double-seat valve according to Claim I, characterized in that the sealing rings (23, 24) are loosely inset into the peripheral grooves (21, 22).

3. Double-seat valve according to Claim I or 2, characterized in that the chamfer (31) is located on that side of the peripheral groove (21, 22) which is remote from the valve seat (25, 26) assigned thereto.

4. Double-seat valve according to one of Claims I to 3, characterized in that the rings (27, 28) exhibit a disc-shaped recess (32) which serves to receive a portion of the sealing ring (23, 24).


**Revendications**

1°) Soupape pneumatique à double siège, notamment pour des véhicules ferroviaires par exemple pour manoeuvrer un dispositif de prise de courant, un dispositif de protection contre le glissement, un dispositif de projection de sable, comportant une tige de soupape (11), mobile, un corps de soupape (13, 14) fixé rigidement a la tige de soupape (11), ce corps de soupape comportant deux joints d'étanchéité (23, 24) radialement en saillie, et distants axialement, deux sièges de soupape (25, 26) fixes, tournés l'un vers l'autre et coopérant respectivement avec l'un des joints d'étanchéité (23, 24), sièges qui entourent un passage allant d'une chambre de soupape (C), médiane à une chambre de soupape extérieure (B, D), le diamètre du corps de soupape (13, 14) étant inférieur à celui des passages, deux bagues (27, 28) montées coulissantes sur le corps de soupape (13, 14) entre les joints d'étanchéité (23, 24), bagues qui poussent les deux joints d'étanchéité (23, 24) sur les sièges de soupape (25, 26) par l'intermédiaire d'un ressort (29) prevu entre les bagues (27, 28) lorsque la soupape à double siège occupe sa position médiane, et limite la course de soupape par des butées respectives pour chacune des positions d'ouverture, caractérisée en ce que les joints d'étanchéité (23, 24) sont logés dans des rainures périphériques (21, 22) du corps de soupape (13, 14), chacune des rainures périphériques (21, 22) présente d'un côte, un conge (31) qui sert de surface d'appui pour le joint d'étanchéité (23, 24) qu'elle reçoit, et chacune des bagues (27, 28)chargées par le ressort comporte une bride (30) dirigée radialement vers l'intérieur et qui s'appuie sur le corps de soupape (13, 14) pour limiter son déplacement, dans la direction des sièges de soupape (25, 26) sur le corps de soupape (13, 14).

2°) Soupape à double siège selon la revendication 1, caractérisée en ce que les joints d'étanchéité (23, 24) sont places librement dans les rainures périphériques (21, 22).

3°) Soupape à double siège selon les revendications 1 ou 2, caractérisée en ce qu congé (31) se trouve du côté de la rainure périphérique (21, 22) oppose à celui du sièg soupape (25, 26) correspondant.

4°) Soupape à double siège selon l'une de revendications 1 à 3, caractérisée en ce que bagues (27, 28) ont une cavité (32) en forme coupelle pour recevoir partiellement les join d'étanchéité (23, 24).